# EUROPÄISCHE PATENTANMELDUNG

(11) **EP 4 810 927 A1**
(43) Veröffentlichungstag der Anmeldung: **23.09.2026**
(21) Anmeldenummer: 25164017.3
(22) Anmeldetag: 17.03.2025
(51) Int. Cl.: G01L 3/14, G01D 5/20, G01D 5/245, G01D 5/249, G01L 3/10

(54) **DREHMOMENTSENSOR MIT INDUKTIVER DREHWINKELMESSUNG**

(71) Anmelder: NCTE AG, 82041 Oberhaching (DE)
(72) Erfinder: ECKSCHLAGER, Florian, 85521 Riemerling (DE); MUTZ, Robert, 82031 Grünwald (DE)
(74) Vertreter: Grünecker Patent- und Rechtsanwälte PartG mbB

(57) **Zusammenfassung**

Die Erfindung betrifft einen Drehmomentsensor, der umfasst: ein um eine Drehachse drehbar gelagertes, magnetisiertes Bauteil; eine feststehende Magnetfeldsensoranordnung mit wenigstens einem Magnetfeldsensor zur Erfassung eines vom magnetisierten Bauteil erzeugten Magnetfelds bei einem am magnetisierten Bauteil anliegenden Drehmoment; eine Auswertevorrichtung, die zur Ermittlung des anliegenden Drehmoments aus dem erfassten Magnetfeld ausgebildet ist; und eine Drehwinkelsensoranordnung zur Erfassung eines Drehwinkels des magnetisierten Bauteils. Die Drehwinkelsensoranordnung umfasst ein feststehendes Antennen-Element mit wenigstens einer ersten Antenne zum Aussenden eines Anregungssignals; ein Target-Element, das synchron mit dem magnetisierten Bauteil und relativ zum feststehenden Antennen-Element drehbar vorgesehen ist, wobei das Target-Element zum Erzeugen eines von einem momentanen Drehwinkel abhängigen Reaktionssignals auf das Anregungssignal ausgebildet ist; und wobei das feststehende Antennen-Element wenigstens eine zweite Antenne zum Empfangen des Reaktionssignals und Erzeugen eines Induktionssignals basierend auf dem Reaktionssignal umfasst. Die Auswertevorrichtung ist weiterhin dazu ausgebildet, basierend auf dem erzeugten Induktionssignal den momentanen Drehwinkel des Target-Elements und/oder des magnetisierten Bauteils zu ermitteln.

## Beschreibung

### Gebiet der Erfindung

Die Erfindung betrifft einen Drehmomentsensor.

### Stand der Technik

Im Stand der Technik sind Drehmomentsensoren bekannt, die beispielsweise in Tretlagern bzw. Antriebslagern von Pedelecs oder E-Bikes verbaut sind. Ein Beispiel für einen solchen Drehmomentsensor, der auf dem Prinzip des inversen magnetostriktiven Effekts beruht, ist in EP 3 050 790 B1 offenbart. Dabei erzeugt eine magnetisierte Welle des Lagers in Abhängigkeit von einem anliegenden Drehmoment ein entsprechendes Magnetfeld außerhalb der Welle, das kontaktlos mit einem Magnetfeldsensor erfasst werden kann.

Die Messung von Magnetfeldänderung durch ein Drehmoment kann z.B. durch Messspulen oder magnetoresistive Magnetfeldsensoren in einer Messschaltung erfolgen, die durch das sich veränderte Magnetfeld beeinflusst werden. Diese werden berührungslos in Relation zur der magnetisierten Welle angebracht (z.B. parallel zur Drehachse) und erfassen Magnetfeldänderungen, die unter Last aufgrund der inversen Magnetostriktion auftreten. Die Magnetfeldänderung ist in der Regel direkt proportional zur äußeren Krafteinwirkung und stellt den Zusammenhang mit dem Drehmoment her. Dazu wird in der Herstellungsphase des Drehmomentsensors eine einmalige Kalibrierung durchgeführt.

Bei der Kalibrierung wird ggf. auch ein an der Messposition vorhandenes konstantes Restmagnetfeld von der magnetisierten Welle ohne anliegendes Moment durch Festsetzung der Nullstelle einer Magnetfeld-Drehmomentwert-Kurve berücksichtigt, so dass diesem Restmagnetfeld der Drehmomentwert Null zugeordnet wird.

Weiterhin ist aus EP 3 050 790 A1 ein Drehmomentsensor mit Drehzahlmessung für ein Tretlager bekannt, wobei die Drehzahl mit einem magnetischen Polring und einem Hall-Sensor bestimmt wird. Nachteilig dabei ist die erforderliche Baugröße des Drehmomentsensors durch den Polring und den Hall-Sensor, sowie die fehlende Erfassung des genauen Drehwinkels. Zudem kann es durch den Polring zu Interferenzen mit dem durch den magnetostriktiven Effekt erzeugten Magnetfeldes kommen und somit Messungenauigkeiten verursachen.

### Beschreibung der Erfindung

Der Erfindung liegt die Aufgabe zugrunde, die genannten Nachteile der aus dem Stand der Technik bekannten Drehmomentsensoren zumindest teilweise auszuräumen.

Diese Aufgabe wird durch einen Drehmomentsensor gemäß Patentanspruch 1 gelöst.

Der erfindungsgemäße Drehmomentsensor umfasst ein um eine Drehachse drehbar gelagertes, magnetisiertes Bauteil; eine feststehende Magnetfeldsensoranordnung mit wenigstens einem Magnetfeldsensor zur Erfassung eines vom magnetisierten Bauteil erzeugten Magnetfelds bei einem am magnetisierten Bauteil anliegenden Drehmoment; eine Auswertevorrichtung, die zur Ermittlung des anliegenden Drehmoments aus dem erfassten Magnetfeld ausgebildet ist; und eine Drehwinkelsensoranordnung zur Erfassung eines Drehwinkels des magnetisierten Bauteils. Die Drehwinkelsensoranordnung umfasst ein feststehendes Antennen-Element mit einer Sendeantennenanordnung zum Aussenden eines Anregungssignals; ein Target-Element, das synchron mit dem magnetisierten Bauteil und relativ zum feststehenden Antennen-Element drehbar vorgesehen ist, wobei das Target-Element zum Erzeugen eines von einem momentanen Drehwinkel abhängigen Reaktionssignals auf das Anregungssignal ausgebildet ist; und wobei das feststehende Antennen-Element eine Empfangsantennenanordnung zum Empfangen des Reaktionssignals und Erzeugen eines Induktionssignals basierend auf dem Reaktionssignal umfasst. Die Auswertevorrichtung ist weiterhin dazu ausgebildet, basierend auf dem erzeugten Induktionssignal den momentanen Drehwinkel des Target-Elements und/oder des magnetisierten Bauteils zu ermitteln.

Auf diese Weise kann nicht nur das momentan am drehbaren Bauteil anliegende Drehmoment ermittelt, sondern auch der zugehörige momentane Drehwinkel bestimmt werden.

Die Sendeantennenanordnung und die Empfangsantennenanordnung können auf diese Weise über das Target-Element induktiv gekoppelt sein. Das Anregungssignal kann eine Frequenz von einigen MHz haben (somit auch das Reaktionssignal). Das Bauteil kann sich mit einer Frequenz von einigen kHz oder weniger um die Drehachse drehen. Messwerte für das Drehmoment können mit einer Frequenz im Bereich von etwa 40 kHz bis 100 kHz erfasst werden.

Dies kann dahingehend weitergebildet werden, dass das drehbar gelagerte, magnetisierte Bauteil eine magnetisierte Welle umfasst. Alternativ dazu kann das drehbar gelagerte, magnetisierte Bauteil eine Scheibe oder ein Speichenrad umfassen, die bzw. das senkrecht zur Drehachse angeordnet ist.

Das magnetisierte Bauteil und das Target-Element können eine bauliche Einheit bilden.

Diese Alternativen beinhalten vorteilhafte Alternativen für das drehbar gelagerte, magnetisierte Bauteil, je nach baulichen Gegebenheiten und Anforderungen des zur Verfügung stehenden Freiraums.

Das Material des Target-Elements kann beispielsweise ein elektrisch leitfähiges Metall umfassen. Die von der Sendeantennenanordnung ausgesendeten Anregungssignale können im Target-Element Wirbelströme bewirken, die wiederum in der Empfangsantennenanordnung ein drehwinkelabhängiges Signal induzieren, das erfasst und ausgewertet werden kann. Das elektrisch leitfähige Metall ist vorzugsweise nichtmagnetisch, so dass keine die Drehmomentmessung störenden Magnetfelder erzeugt werden (wie beispielsweise Kupfer oder Aluminium). Alternativ kann das Target-Element eine Platine mit einem Antennenelement umfassen.

Das Target-Element kann zumindest teilweise scheibenförmig sein, insbesondere ein oder mehrere Sektoren oder Segmente einer Kreisscheibe oder einen Teil einer ringförmigen Scheibe umfassen.

Gemäß einer anderen Weiterbildung kann der Magnetfeldsensor wenigstens eine elektrische Spule oder wenigstens einen magnetoresistiven Magnetfeldsensor umfassen.

Magnetoresistive Sensoren zur Magnetfeldmessung basieren beispielsweise auf dem AMR-Effekt (anisotropic magnetoresistance), dem GMR-Effekt (giant magnetoresistance), dem CMR-Effekt (colossal magnetoresistance), dem TMR-Effekt (tunnel magnetoresistance), dem EMR-Effekt (extraordinary magnetoresistance) oder dem planaren Hall-Effekt.

Eine andere Weiterbildung besteht darin, dass das Antennen-Element als senkrecht zur Drehachse angeordnete Scheibe, insbesondere ringförmige Scheibe, ausgebildet sein kann.

In einer anderen Weiterbildung kann das vom magnetisierten Bauteil erzeugte Magnetfeld drehwinkelabhängig sein und die Auswertevorrichtung kann weiterhin dazu ausgebildet sein, unter Verwendung des erfassten, vom magnetisierten Bauteil erzeugten Magnetfelds und des ermittelten momentanen Drehwinkels, das anliegende Drehmoment zu ermitteln.

Dies kann dahingehend weitergebildet werden, dass das vom magnetisierten Bauteil erzeugte Magnetfeld einen drehwinkelunabhängigen Anteil und einen drehwinkelabhängigen Anteil aufweisen kann, und wobei die Auswertevorrichtung weiterhin dazu ausgebildet sein kann, einen Messfehler des ermittelten Drehmoments aufgrund des drehwinkelabhängigen Anteils unter Verwendung des drehwinkelabhängigen Anteils des Magnetfelds und des ermittelten momentanen Drehwinkels zu korrigieren.

Gemäß einer anderen Weiterbildung kann die Auswertevorrichtung ausgebildet sein, eine Drehzahl / Drehfrequenz aus einer Abfolge von wenigstens zwei ermittelten Drehwinkeln und wenigstens einem Zeitunterschied der Ermittlungen zu bestimmen.

Eine andere Weiterbildung besteht darin, dass das Antennen-Element als Platine ausgebildet sein kann und die Sendeantennenanordnung und die Empfangsantennenanordnung als Leiterbahnen auf der Platine vorgesehen sein können.

Die Erfindung betrifft weiterhin ein Antriebslager, insbesondere ein Tretlager, mit dem erfindungsmäßen Drehmomentsensor oder einer der oben genannten Weiterbildungen.

In dem Antriebslager kann das magnetisierte Bauteil eine Antriebswelle, eine Scheibe oder ein Kettenblatt sein.

Das Antriebslager kann in einem Pedelec oder einem E-Bike vorgesehen sein.

Weitere Merkmale und beispielhafte Ausführungsformen sowie Vorteile der vorliegenden Erfindung werden nachfolgend anhand der Zeichnungen näher erläutert. Es versteht sich, dass die Ausführungsformen nicht den Bereich der vorliegenden Erfindung erschöpfen. Es versteht sich weiterhin, dass einige oder sämtliche der im Weiteren beschriebenen Merkmale auch auf andere Weise miteinander kombiniert werden können.

### Kurzbeschreibung der Zeichnungen

- Fig. 1: zeigt eine erste Ausführungsform des erfindungsgemäßen Drehmomentsensors.
- Fig. 2: zeigt eine zweite Ausführungsform des erfindungsgemäßen Drehmomentsensors.
- Fig. 3: zeigt ein Tretlager mit dem erfindungsgemäßen Drehmomentsensor.

### Ausführungsformen

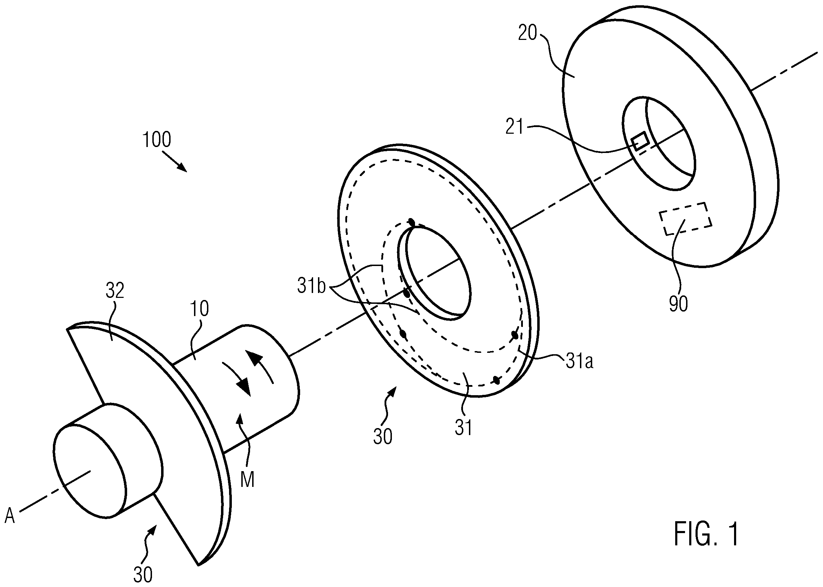

Figur 1 zeigt eine erste Ausführungsform 100 des erfindungsgemäßen Drehmomentsensors.

Der erfindungsgemäße Drehmomentsensor 100 umfasst ein um eine Drehachse A drehbar gelagertes, magnetisiertes Bauteil 10; eine feststehende Magnetfeldsensoranordnung 20 mit wenigstens einem Magnetfeldsensor 21 zur Erfassung eines vom magnetisierten Bauteil 10 erzeugten Magnetfelds M bei einem am magnetisierten Bauteil 10 anliegenden Drehmoment; eine Auswertevorrichtung 90, die zur Ermittlung des anliegenden Drehmoments aus dem erfassten Magnetfeld ausgebildet ist; und eine Drehwinkelsensoranordnung 30 zur Erfassung eines Drehwinkels des magnetisierten Bauteils 10. Das magnetisierte Bauteil ist hier eine magnetisierte Welle 10 aus Stahl, die in einem Bereich der Welle 10 umlaufend magnetisiert ist. Insbesondere können zwei benachbarte Bereiche gegenläufig magnetisiert sein, wie in Fig. 1 dargestellt, die mit jeweils einem Magnetfeldsensor 21 erfasst werden.

Die Drehwinkelsensoranordnung 30 umfasst ein feststehendes Antennen-Element 31 mit einer Sendeantennenanordnung 31a zum Aussenden eines Anregungssignals; ein Target-Element 32, das synchron mit dem magnetisierten Bauteil 10 und relativ zum feststehenden Antennen-Element 31 drehbar vorgesehen ist, wobei das Target-Element 32 zum Erzeugen eines von einem momentanen Drehwinkel abhängigen Reaktionssignals auf das Anregungssignal ausgebildet ist; und wobei das feststehende Antennen-Element 31 eine Empfangsantennenanordnung 31b zum Empfangen des Reaktionssignals und Erzeugen eines Induktionssignals basierend auf dem Reaktionssignal umfasst. Das Target-Element 32 besteht beispielsweise aus Kupfer oder Aluminium. In dieser Ausführungsform ist das Target-Element 32 ein halber Ring auf der Welle 10.

Das Antennen-Element 31 und die Magnetfeldsensoranordnung 20 weisen mittige Öffnungen auf, so dass sie auf die Welle 10 geschoben werden können. Dann befindet sich das Antennen-Element 31 nahe an dem Target-Element 32 und die Magnetfeldsensoranordnung 20 über dem magnetisierten Bereich der Welle 10.

Das Anregungssignal hat eine Frequenz von einigen MHz. Das Bauteil rotiert mit einer Frequenz von einigen kHz oder weniger. Für das Beispiel eines E-Bikes ist die Rotationsfrequenz weniger als 10 Hz, während Antriebswellen in Produktionsmaschinen mit Frequenzen bis zu einigen kHz rotieren können. Die üblichen Frequenzen eines Schwingkreises mit Spulen als Magnetfeldsensoren liegen im Bereich von 40 kHz bis 100 kHz. Im Falle eines magnetoresistiven Magnetfeldsensors wird dieser mit Frequenzen von einigen kHz bestromt, um das Magnetfeld zu messen. Deshalb ist die Änderung des Anregungssignals um ein Vielfaches schneller als die Messfrequenz des Magnetfeldes (um mindestens einen Faktor 100), so dass induzierte Ströme bzw. induzierte Magnetfelder nicht die Drehmomentmessung beinträchtigen, sondern bei Bedarf als konstanter Hintergrund korrigiert werden können.

Die Auswertevorrichtung 90 ist weiterhin dazu ausgebildet, basierend auf dem erzeugten Induktionssignal den momentanen Drehwinkel des Target-Elements 32 und/oder des magnetisierten Bauteils 10 zu ermitteln.

Die Magnetfeldsensoren 11 sind hier elektrische Spulen 11. Alternativ oder zusätzlich können jedoch auch ein oder mehrere magnetoresistive Magnetfeldsensoren angeordnet sein, um das vom magnetisierten Bauteil 10 erzeugte Magnetfeld bei einem am magnetisierten Bauteil 10 anliegenden Drehmoment zu erfassen.

Das Antennen-Element 31 ist hier als Platine 31 ausgebildet und die Sendeantennenanordnung 31a und die Empfangsantennenanordnung 31b sind als Leiterbahnen auf der Platine 31 vorgesehen. Die Sendeantennenanordnung 31a umfasst im dargestellten Beispiel ein im äußeren Randbereich der Platine 31 umlaufendes Antennenelement 31a. Die Empfangsantennenanordnung 31b umfasst im dargestellten Beispiel zwei um 90° in Drehrichtung versetzt angeordnete Antennenelemente 31b. Die Empfangsantennenanordnung 31b kann jedoch auch zwei weitere Antennenelemente in Verbindung mit einer weiteren Sendeantennenanordnung umfassen.

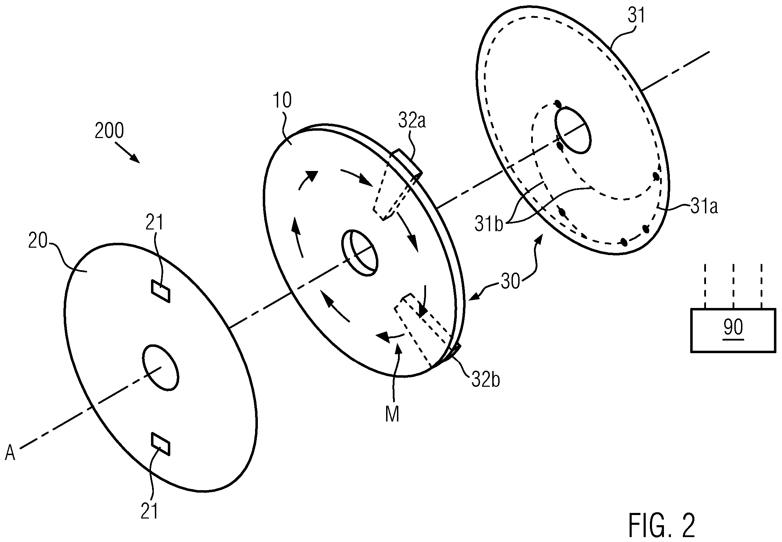

Figur 2 zeigt eine zweite Ausführungsform 200 des erfindungsgemäßen Drehmomentsensors.

In dieser Ausführungsform ist das magnetisierte Bauteil 10 eine Scheibe 10 (bzw. ein Speichenrad), die senkrecht zur Drehachse A angeordnet ist. Dabei kann das magnetisierte Bauteil 10 (Scheibe 10) und das Target-Element 32 eine bauliche Einheit bilden. Das Target-Element 32 umfasst hier beispielsweise auf der der Platine 31 zugewandten Seite der Scheibe 10 Elemente 32a, 32b, jeweils in Form eines Kreissektors.

Insbesondere kann das magnetisierte Bauteil 10 auch nicht-magnetische, elektrisch leitende Elemente aufweisen, die als Target-Element 32 fungieren, also das magnetisierte Bauteil 10 und das Target-Element 32 können ein einziges Bauteil sein. Das Target-Element 32 umfasst hier beispielsweise auf der Seite der Scheibe 10, die der Platine 31 zugewandt ist, Elemente 32a, 32b, jeweils in Form eines Kreissektorabschnitts.

In der ersten und der zweiten Ausführungsform 100, 200 kann eine (in der Regel unerwünschte) asymmetrische vom Drehwinkel abhängige Magnetfeldverteilung in Umfangsrichtung der Welle 10 (Scheibe 10) korrigiert werden, um zu jedem Drehwinkel eine korrekte Drehmomentbestimmung zu ermöglichen. Diese Asymmetrie des erzeugten Magnetfelds ist normalerweise klein verglichen mit einem durchschnittlichen über einen vollständigen Umlauf der Welle (Scheibe 10) gemittelten Magnetfeld. Solche Asymmetrien können durch eine nicht vollständig homogene, initiale Magnetisierung der Welle 10 (Scheibe 10) entstehen, oder durch den Einfluss von Fremdfeldern nach der initialen Magnetisierung hervorgerufen werden.

Eine solche Fehlmagnetisierung kann in der Auswertevorrichtung 90 drehwinkelabhängig korrigiert werden, um das momentan anliegende Drehmoment genau zu bestimmen. Ansonsten ist man beispielsweise auf eine durchschnittliche Bestimmung über eine vollständige Drehung beschränkt.

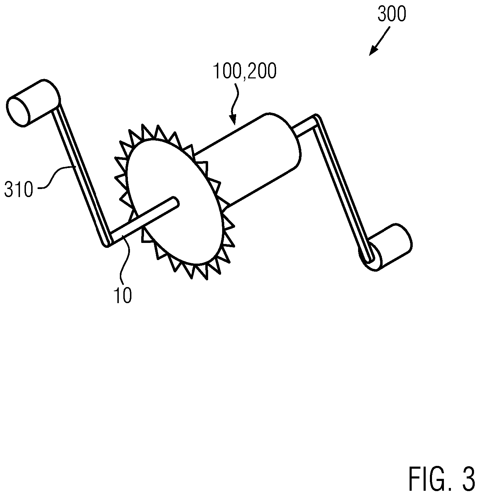

Figur 3 zeigt ein Tretlager 300 mit dem erfindungsgemäßen Drehmomentsensor 100 oder 200 gemäß Figur 1 oder 2.

Das Drehmoment wird hier über eine Tretkurbel 310 und/oder einen Antriebsmotor an der Welle 10 angelegt. Das Drehmoment und die Drehzahl werden bestimmt. Daraus können weitere Parameter wie etwa die eingebrachte Leistung durch eine Person oder den Antriebsmotor ermittelt werden.

Die dargestellten Ausführungsformen sind lediglich beispielhaft und der vollständige Umfang der vorliegenden Erfindung wird durch die Ansprüche definiert.

## Patentansprüche

1. Drehmomentsensor, umfassend:
ein um eine Drehachse drehbar gelagertes, magnetisiertes Bauteil;
eine feststehende Magnetfeldsensoranordnung mit wenigstens einem Magnetfeldsensor zur Erfassung eines vom magnetisierten Bauteil erzeugten Magnetfelds bei einem am magnetisierten Bauteil anliegenden Drehmoment;
eine Auswertevorrichtung, die zur Ermittlung des anliegenden Drehmoments aus dem erfassten Magnetfeld ausgebildet ist; und
eine Drehwinkelsensoranordnung zur Erfassung eines Drehwinkels des magnetisierten Bauteils, wobei die Drehwinkelsensoranordnung umfasst:
ein feststehendes Antennen-Element mit wenigstens einer Sendeantennenanordnung zum Aussenden eines Anregungssignals;
ein Target-Element, das synchron mit dem magnetisierten Bauteil und relativ zum feststehenden Antennen-Element drehbar vorgesehen ist, wobei das Target-Element zum Erzeugen eines von einem momentanen Drehwinkel abhängigen Reaktionssignals auf das Anregungssignal ausgebildet ist;
wobei das feststehende Antennen-Element wenigstens eine Empfangsantennenanordnung zum Empfangen des Reaktionssignals und Erzeugen eines Induktionssignals basierend auf dem Reaktionssignal umfasst; und
wobei die Auswertevorrichtung weiterhin dazu ausgebildet ist, basierend auf dem erzeugten Induktionssignal den momentanen Drehwinkel des Target-Elements und/oder des magnetisierten Bauteils zu ermitteln.

2. Drehmomentsensor nach Anspruch 1, wobei das drehbar gelagerte, magnetisierte Bauteil eine magnetisierte Welle umfasst.

3. Drehmomentsensor nach Anspruch 1, wobei das drehbar gelagerte, magnetisierte Bauteil eine Scheibe oder ein Speichenrad umfasst, die bzw. das senkrecht zur Drehachse angeordnet ist.

4. Drehmomentsensor nach Anspruch 3, wobei das magnetisierte Bauteil und das Target-Element eine bauliche Einheit bilden, insbesondere wobei das magnetisierte Bauteil und das Target-Element ein einziges Bauteil sind.

5. Drehmomentsensor nach einem der Ansprüche 1 bis 4, wobei das Material des Target-Elements ein Metall, insbesondere ein nicht-magnetisches, elektrisch leitfähiges Metall, umfasst; oder wobei das Target-Element eine Platine mit einem Antennenelement umfasst.

6. Drehmomentsensor nach einem der Ansprüche 1 bis 5, wobei das Target-Element zumindest teilweise scheibenförmig ist, insbesondere ein oder mehrere Sektoren oder Segmente einer Kreisscheibe oder ein oder mehrere Teile einer ringförmigen Scheibe umfasst.

7. Drehmomentsensor nach einem der Ansprüche 1 bis 6, wobei der Magnetfeldsensor wenigstens eine elektrische Spule oder wenigstens einen magnetoresistiven Magnetfeldsensor umfasst.

8. Drehmomentsensor nach einem der Ansprüche 1 bis 7, wobei das Antennen-Element als senkrecht zur Drehachse angeordnete Scheibe, insbesondere ringförmige Scheibe, ausgebildet ist.

9. Drehmomentsensor nach einem der Ansprüche 1 bis 8, wobei das vom magnetisierten Bauteil erzeugte Magnetfeld drehwinkelabhängig ist und die Auswertevorrichtung weiterhin dazu ausgebildet ist, unter Verwendung des erfassten, vom magnetisierten Bauteil erzeugten Magnetfelds und des ermittelten momentanen Drehwinkels, das anliegende Drehmoment zu ermitteln.

10. Drehmomentsensor nach Anspruch 9, wobei das vom magnetisierten Bauteil erzeugte Magnetfeld einen drehwinkelunabhängigen Anteil und einen drehwinkelabhängigen Anteil aufweist, und wobei die Auswertevorrichtung weiterhin dazu ausgebildet ist, einen Messfehler des ermittelten Drehmoments aufgrund des drehwinkelabhängigen Anteils unter Verwendung des drehwinkelabhängigen Anteils und des ermittelten momentanen Drehwinkels zu korrigieren.

11. Drehmomentsensor nach einem der Ansprüche 1 bis 10, wobei die Auswertevorrichtung ausgebildet ist, eine Drehzahl / Drehfrequenz aus einer Abfolge von wenigstens zwei ermittelten Drehwinkeln und wenigstens einem Zeitunterschied der Ermittlungen zu bestimmen.

12. Drehmomentsensor nach einem der Ansprüche 1 bis 11, wobei das Antennen-Element als Platine ausgebildet ist und die Sendeantennenanordnung und die Empfangsantennenanordnung als Leiterbahnen auf der Platine vorgesehen sind.

13. Antriebslager, insbesondere ein Tretlager, umfassend einen Drehmomentsensor nach einem der Ansprüche 1 bis 12.

14. Antriebslager nach Anspruch 13, wobei das magnetisierte Bauteil eine Antriebswelle, eine Scheibe oder ein Kettenblatt ist.

15. Vorrichtung, umfassend ein Antriebslager nach Anspruch 13 oder 14, wobei die Vorrichtung eine Produktionsmaschine, ein Agrarfahrzeug, ein Pedelec oder ein E-Bike ist.
